# DEMANDE DE BREVET EUROPEEN

(11) **EP 2 134 141 A2**
(43) Date de publication de la demande: **16.12.2009**
(21) Numéro de dépôt: 09162202.7
(22) Date de dépôt: 08.06.2009
(51) Int. Cl.: H05B 1/02, B29C 49/68

(54) **Dispositif et procédé de commande de fours à lampes infrarouges**

(30) Priorité: 09.06.2008 FR 0803195
(71) Demandeur: Olilab LLC, Albany, NY 12210 (US)
(72) Inventeur: Dupuis, Alain, 1205, Genève (CH)
(74) Mandataire: Bugnion Genève

(57) **Abrégé**

La présente invention concerne un dispositif de commande d'au moins un moyen de chauffage (6) compris dans une installation de préchauffage de préformes utilisées dans la fabrication d'emballages en matière synthétique. Le dispositif comporte au moins un moyen de détection (3) mis en série avec ledit moyen de chauffage (6) ainsi qu'avec un premier commutateur de puissance (4) et permettant la mesure du courant et/ou de la tension, au moins un deuxième commutateur de puissance (5) mis en parallèle audit premier commutateur de puissance (4) et piloté par une carte de contrôle (8), ladite carte de contrôle (8) étant adapté à dévier, dès qu'un courant dépassant une valeur de seuil est détecté dans ledit moyen de détection (3), le courant dans ledit deuxième commutateur de puissance (5). L'invention concerne aussi un procédé de commande et une installation de préchauffage correspondants.

## Description

La présente invention concerne généralement le domaine de la fabrication d'emballages en matière synthétique, notamment le traitement des préformes utilisées dans le processus de fabrication de ces emballages, et a spécifiquement pour objet un dispositif et un procédé correspondant de commande d'un moyen de chauffage à rayonnement infrarouge utilisé dans ce contexte.

Actuellement, des emballages en matière synthétique, typiquement par exemple des bouteilles en polyéthylène téréphtalate (PET), sont normalement fabriqués par étirage-soufflage d'une préforme chauffée préalablement à une température de l'ordre de 100°C. Un moyen de préchauffage préféré des préformes consiste en des lampes rayonnant dans le spectre infrarouge devant lesquelles les préformes défilent. Le rayonnement infrarouge est généralement produit par des filaments de tungstène qui se trouvent dans les lampes et qui, une fois traversés par un courant réglable, rayonnent avec une intensité donnée et chauffent ainsi les préformes.

Les préformes peuvent avoir des formes et épaisseurs différentes en fonction de l'emballage à produire. Par conséquent, les paramètres d'opération d'une telle lampe infrarouge ainsi que du traitement effectué dans le dispositif d'étirage-soufflage varient en fonction des caractéristiques de la préforme. Par ailleurs, afin de garantir un chauffage maîtrisé de la préforme dans l'épaisseur de son paroi et selon son profil, les préformes défilent en règle générale devant une succession de fours indépendants équipés chacun de plusieurs lampes infrarouges installées à l'horizontale. Les paramètres de fonctionnement de chacune de ces lampes sont commandés de manière indépendante par un dispositif de commande dont l'électronique est programmable selon lesdites caractéristiques de la préforme.

Notamment, le dispositif de commande, communément appelé régulateur électronique, permet la commande des lampes d'un four à partir d'un réseau électrique industriel à courant alternatif (AC). Le régulateur électronique est généralement alimenté par le réseau électrique industriel alternatif en monophasé et est relié à un système central de commande par un bus de terrain. En fonction des ordres et des consignes reçues du système central de commande par le bus de terrain, le régulateur pilote chaque lampe selon un algorithme de régulation adapté et retourne au système centrale toutes les informations pertinentes relevées, en outre, sur les lampes.

Ce genre de régulateur électronique comporte normalement des commutateurs électroniques de puissance qui sont pilotés par une commande électronique et qui permettent de maîtriser le courant dans les lampes infrarouges pour chaque demi-alternance du réseau alternatif. Les commutateurs électroniques de puissance adaptés à gérer la puissance fournie aux lampes infrarouges utilisés dans lesdits fours de préchauffage sont souvent des thyristors, des IGBT (Insulated Gate Bipolar Transistor) ou d'autres commutateurs semiconductrices utilisant d'autres technologies adaptées à cette fin.

Etant donné cette configuration typique d'une installation de préchauffage de préformes en matière synthétique en vue de leur traitement ultérieur par un dispositif d'étirage-soufflage, il est à noter que les lampes infrarouges, notamment leurs filament en tungstène, représentent un élément fragile qui occasionne assez souvent un court-circuit dans l'installation. D'autres phénomènes peuvent conduire au même résultat qui consiste en ce que le circuit du dispositif de commande est traversé par un courant très élevé qui risque d'endommager nombre de composants par le dépôt d'au moins une partie de son énergie thermique en traversant ces composants. En particulier, il arrive fréquemment que lesdits commutateurs électroniques de puissance sont détruits par un court-circuit causé par un bris de lampe infrarouge.

Pour éviter un endommagement notamment des commutateurs électroniques de puissance, on prévoit conventionnellement des fusibles rapides en amont des éléments sensibles aux variations brutales et aux valeurs de court-circuit du courant. Cette méthode de protection est simple et efficace, mais présente l'inconvénient majeur de devoir changer les fusibles après chaque court-circuit.

Il est aussi possible de remplacer les fusibles rapides par des disjoncteurs électromécaniques ré-armables après un court-circuit. Ces derniers sont pourtant moins rapides que des fusibles et diminuent ainsi la protection absolue des commutateurs électroniques voire d'autres composants du dispositif de commande. Par ailleurs, les valeurs extrêmes des courants de court-circuit sur des installations industrielles de grande puissance rendent souvent impossible la protection des commutateurs électroniques ou d'autres composants de puissance par des fusibles ou par des disjoncteurs rapides en dépassent les valeurs de seuil supportées par ces éléments.

Alternativement, il est aussi connu de protéger les composants du dispositif de commande, notamment les commutateurs électroniques de puissance, par un disjoncteur électronique de puissance. Cette méthode a l'avantage de couper l'intensité en un temps très bref et d'assurer une bonne protection, mais elle a le désavantage que l'intensité nominale de l'installation traverse le disjoncteur. Ce dernier subit alors une chute de tension liée à sa structure en tant que semiconducteur, occasionnant un échauffement non-négligeable et non-souhaité.

Le but de la présente invention est d'obvier aux inconvénients précités des solutions connues et de proposer un dispositif de commande ainsi qu'un procédé de commande correspondant permettant une protection simple et efficace des composants d'un tel dispositif de commande d'une installation de préchauffage comportant notamment un moyen de chauffage à rayonnement infrarouge.

L'invention a ainsi pour objet un dispositif de commande d'au moins un moyen de chauffage compris dans une installation de préchauffage de préformes utilisées dans la fabrication d'emballages en matière synthétique, le dispositif de commande comportant au moins un premier commutateur de puissance mis en série avec ledit au moins un moyen de chauffage et une carte de contrôle permettant de régler l'intensité de courant de manière indépendante à travers chaque moyen de chauffage par l'intermédiaire du premier commutateur de puissance correspondant, le dispositif étant caractérisé par le fait qu'il comporte au moins un moyen de détection mis en série avec ledit moyen de chauffage ainsi qu'avec ledit premier commutateur de puissance et permettant la mesure du courant et/ou de la tension, au moins un deuxième commutateur de puissance mis en parallèle audit premier commutateur de puissance et piloté par ladite carte de contrôle, ladite carte de contrôle étant adapté à dévier, dès qu'un courant dépassant une valeur de seuil est détecté dans ledit moyen de détection, le courant dans ledit deuxième commutateur de puissance.

Ce genre de dispositif permet de protéger efficacement les composants, notamment les commutateurs de puissance contre un endommagement suite à un court-circuit sans pour autant générer de la chaleur lors du fonctionnement normal. De plus, le temps de réaction est très rapide.

Normalement, ce genre de dispositif de commande peut être alimenté par un réseau électrique industriel en courant alternatif.

Le premier commutateur de puissance et le deuxième commutateur de puissance peuvent consister en un thyristor ou un transistor bipolaire à grille isolée (IGBT). De préférence, le premier - et le deuxième commutateur de puissance ont une capacité thermique comprise entre 400 A²s et 900 A²s respectivement entre 15.000 A²s et 35.000 A²_{S}.

Par ailleurs, le dispositif de commande comporte normalement au moins un disjoncteur électromécanique mis en série avec ledit moyen de détection, avec ledit au moins un premier commutateur de puissance, ainsi qu'avec ledit au moins un moyen de chauffage.

Ledit au moins un moyen de détection peut consister en un détecteur Hall et ladite carte de contrôle est en règle générale connectée à un système central de commande.

L'invention concerne également une installation de préchauffage de préformes utilisées dans la fabrication d'emballages en matière synthétique qui comporte au moins un moyen de chauffage ainsi qu'au moins un tel dispositif de commande. Souvent, chaque moyen de chauffage consiste en une lampe à rayonnement émettant dans le spectre infrarouge. L'installation de préchauffage de préformes peut aussi consister en une succession de fours indépendants comportant chacun au moins une lampe infrarouge, chacune des lampes d'un four étant pilotable ainsi que protégeable de manière indépendante par ledit dispositif de commande.

Finalement, l'invention porte aussi sur un procédé de commande pour la mise en action d'un tel dispositif de commande voire d'une telle installation de préchauffage, le procédé comportant l'étape de régler le courant à travers chaque moyen de chauffage par l'intermédiaire du premier commutateur de puissance correspondant mis en série avec ledit moyen de chauffage, le procédé se distinguant par le fait qu'il comporte encore les étapes de surveiller le courant mesuré par le moyen de détection mis en série avec ledit moyen de chauffage et ledit premier commutateur de puissance, et de dévier, dès qu'un courant dépassant une valeur de seuil est détecté dans ledit moyen de détection, le courant dans le deuxième commutateur de puissance mis en parallèle audit premier commutateur de puissance.

Le procédé de commande peut encore comporter l'étape de bloquer le premier commutateur de puissance ainsi que le deuxième commutateur de puissance dès la fin de la demi-alternance du courant alternatif pendant laquelle un courant dépassant une valeur de seuil a été détecté et/ou l'étape de couper l'alimentation électrique par l'intermédiaire dudit disjoncteur électromécanique dès qu'un courant dépassant une valeur de seuil est détecté dans ledit moyen de détection.

Les dessins annexés représentent, schématiquement et à titre d'exemple, une forme d'exécution de l'invention.

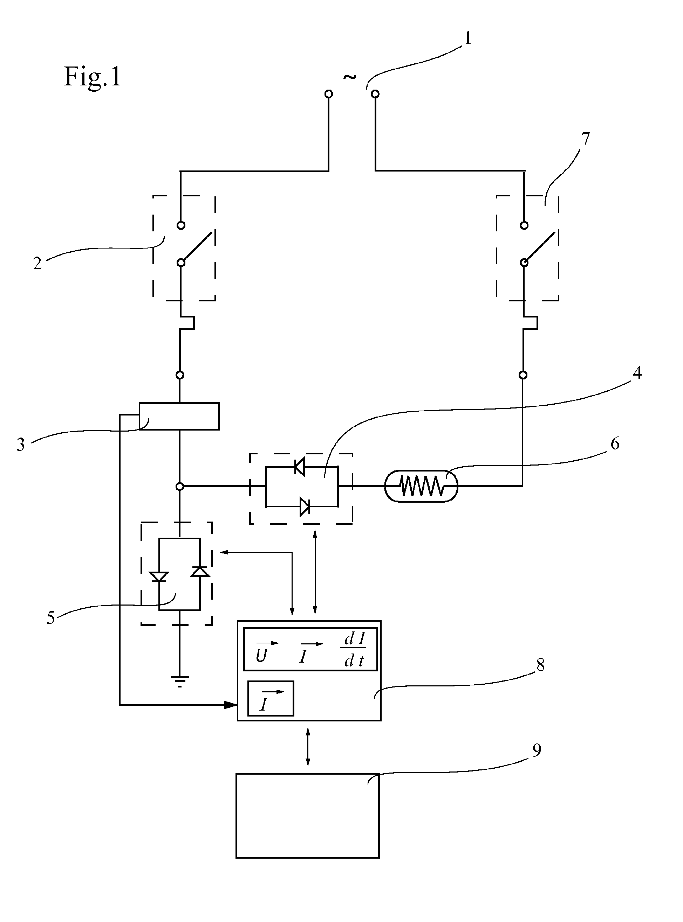

La figure 1 est une vue schématique d'un dispositif de commande selon la présente invention qui permet de piloter un moyen de chauffage utilisé dans une installation de préchauffage de préformes non-représentée.

L'invention va maintenant être décrite en détail en référence aux dessins annexés qui illustrent à titre d'exemple une forme d'exécution de l'invention.

La figure 1 montre schématiquement un dispositif de commande d'au moins un moyen de chauffage 6 utilisé normalement dans une installation de préchauffage de préformes dans le cadre de la fabrication d'emballages en matière synthétique. Ce genre d'installation de préchauffage de préformes selon la présente invention comporte de préférence des moyens de chauffage 6 consistant en des lampes à rayonnement émettant dans le spectre infrarouge, c'est-à-dire en une lampe infrarouge. Souvent, une telle installation de préchauffage consiste en une succession de fours indépendants. Dans ce cas, chaque four comporte normalement plusieurs lampes infrarouges 6, chacune des lampes infrarouges 6 d'un four étant pilotable ainsi que protégeable de manière indépendante par un dispositif de commande selon la présente invention.

En effet, se référant de nouveau à la figure 1, un dispositif de commande selon la présente invention comporte un premier commutateur de puissance 4 mis en série avec ledit moyen de chauffage 6 et une carte de contrôle 8 permettant de régler de manière indépendante l'intensité de courant à travers le moyen de chauffage 6 par l'intermédiaire du premier commutateur de puissance 4. A chaque lampe infrarouge 6, une puissance de typiquement 2.000 W à 3.000 W est fournie, ceci à environ 360 V à 530 V courant alternatif (AC), du fait que le dispositif est normalement alimenté par un réseau électrique industriel 1 à courant alternatif. Le premier commutateur de puissance 4 consiste souvent en un thyristor ou en un transistor bipolaire à grille isolée (IGBT) et sert de régulateur de la puissance fournie à la lampe 6. Ce commutateur de puissance 4 a normalement une capacité thermique, exprimée en termes de I²t, comprise dans la plage de 400 A²s à 900 A²s, de préférence entre 550 A²s et 750 A²s, ces valeurs étant parfaitement compatible avec les courants traversant ce composant lors d'un fonctionnement normal du dispositif. Tel qu'également représenté à la figure 1, la carte de contrôle 8 est adaptée à mesurer le courant I et la tension U dans le commutateur de puissance 4 et peut piloter ce dernier, par exemple à l'aide des signaux dl/dt qu'elle lui envoie, en fonction des consignes de la part d'un système centrale de commande 9 qui parviennent à la carte 8 via un bus connectant ladite carte 8 au système centrale 9.

Pour le reste de la description il est clair pour l'homme du métier que, étant donné qu'une installation de préchauffage de préformes comporte souvent plusieurs moyens de chauffage pilotable indépendamment, le dispositif peut comporter analogiquement plusieurs commutateurs de puissance 4 respectivement même plusieurs cartes de contrôle 8, si nécessaire, même si cela n'est pas spécifié explicitement.

Par ailleurs, le dispositif selon la présente invention se distingue des systèmes connus jusqu'à présent en ce qu'il comporte, en fonction du nombre de lampes infrarouges 6, encore au moins un moyen de détection 3 mis en série avec ledit moyen de chauffage 6 ainsi qu'avec ledit premier commutateur de puissance 4. Le moyen de détection 3 permet la mesure du courant le traversant, evtl. de la tension, et est lié à la carte de contrôle 8 qui lit cette information, tel qu'illustré à la figure 1. Ce moyen de détection 3 peut notamment consister en un détecteur Hall.

Puis, en particulier, au moins un deuxième commutateur de puissance 5 est mis en parallèle audit premier commutateur de puissance 4, en étant connecté par exemple à la terre tel qu'illustré à la figure 1, et peut également être piloté par ladite carte de contrôle 8. Notamment, cette dernière est adapté à piloter le deuxième commutateur de puissance 5 de manière à ce que, dès qu'un courant dépassant une valeur de seuil prédéfinie est détecté dans ledit moyen de détection 3, le courant est dévié dans ledit deuxième commutateur de puissance 5, au lieu de passer à travers le premier commutateur de puissance 4. En effet, le deuxième commutateur de puissance 5 consiste de préférence également en un thyristor ou en un transistor bipolaire à grille isolée (IGBT) voire toute autre type de commutateur adapté, mais la capacité thermique de ce deuxième commutateur de puissance 5 est choisie de manière à se trouver entre environ 15.000 A²s et 35.000 A²s, en fonction des paramètres des autres composants du dispositif de commande. Ce commutateur 5 n'est pas utilisé lors du fonctionnement normale et ne sert qu'en tant que moyen de protection notamment en cas d'un court-circuit se produisant par exemple lorsqu'un filament de tungstène d'une lampe infrarouge se casse, tel que mentionné dans l'introduction. Le commutateur de protection 5 permet en effet de dévier rapidement le courant de court-circuit du fait que le détecteur de Hall 3, la carte de contrôle 8 et par exemple un thyristor de protection n'ont, tous ensemble, qu'un temps de réponse de l'ordre de quelques µs, par exemple un temps de réaction entre environ 1 µs et 4 µs.

Le dispositif de commande comporte normalement aussi au moins un disjoncteur électromécanique 2, 7, en règle générale un entre chaque borne de la source d'alimentation électrique 1 et la lampe infrarouge 6. Comme le montre la figure 2, les disjoncteurs électromécaniques 2, 7 sont mis en série avec ledit moyen de détection 3, avec ledit au moins un premier commutateur de puissance 4, ainsi qu'avec ledit au moins un moyen de chauffage 6, et permettent de couper l'alimentation électrique 1 dès qu'un courant dépassant une valeur de seuil est détecté, ceci pourtant avec un temps de réaction plus élevé par rapport aux thyristors de protection mentionnés ci-dessus.

Ayant décrit jusqu'ici la structure d'un dispositif de commande voire d'une installation de préchauffage selon la présente invention, son fonctionnement sera illustré en décrivant le procédé de commande correspondant pour la mise en action d'un tel dispositif de commande. Ce procédé comporte d'abord l'étape de régler le courant à travers chaque moyen de chauffage 6 par l'intermédiaire du premier commutateur de puissance 4, puis les étapes de surveiller le courant mesuré par le moyen de détection 3, et de dévier, dès qu'un courant dépassant une valeur de seuil est détecté dans ledit moyen de détection 3, le courant dans le deuxième commutateur de puissance 5 mis en parallèle audit premier commutateur de puissance 4. En particulier, le procédé de commande peut comporter l'étape de bloquer le premier commutateur de puissance 4 ainsi que le deuxième commutateur de puissance 5 dès la fin de la demi-alternance du courant alternatif pendant laquelle un courant dépassant une valeur de seuil a été détecté ainsi que l'étape de couper l'alimentation électrique 1 par l'intermédiaire dudit disjoncteur électromécanique 2, 7 dès qu'un courant dépassant une valeur de seuil traverse le disjoncteur.

En résumé, le dispositif fonctionne normalement en régulant la puissance fournie aux lampes infrarouges 6 par l'intermédiaire de la carte de contrôle 8 qui pilote par exemple un thyristor ou un IGBT de régulation 4 tel que cela est connu dans l'art. Par contre, au lieu d'utiliser seulement un fusible ou un disjoncteur en tant que mesure de protection, la présente invention propose d'utiliser un deuxième commutateur, par exemple un thyristor ou un IGBT de protection 5 qui sera dimensionné de manière à supporter un courant de court-circuit. Si un court-circuit se produit effectivement, il est d'abord détecté par le détecteur Hall 3, et la carte de contrôle 8 pilote ensuite le thyristor de protection 5 en appliquant un courant de contrôle correspondant à I'entrée de sa gâchette de manière à le mettre en condition de conduction. Le courant du court-circuit passe alors de préférence par le deuxième commutateur 5 dimensionné en conséquent, au lieu de passer par le premier commutateur 5 qui n'est dimensionné que pour un fonctionnement sous conditions normales. Au cas où les lampes sont alimentées à courant alternatif, ce qui est le cas standard, le thyristor de régulation 4 ainsi que le thyristor de protection 5 sont ensuite automatiquement bloqués dès la fin de la demi-alternance du courant alternatif pendant laquelle un courant dépassant une valeur de seuil a été détecté. Finalement, en fonction du temps de réaction exact des disjoncteurs 2, 7, au moins un de ces derniers coupe complètement l'alimentation électrique 1.

En général, la présente invention permet ainsi par des mesures simples mais efficaces de protéger les composants du dispositif de commande, notamment les commutateurs de puissance 4 servant de régulateur de puissance des lampes infrarouges 6, contre les courts-circuits souvent occasionnés par le bris de ces lampes. L'ensemble des commutateurs électroniques qui gère les lampes à infrarouges voire d'autres charges peut être protégé par des thyristors de protection surdimensionnés dans lesquels le courant de court-circuit est dévié, après détection d'un seuil de courant, jusqu'à la coupure complète opérée par des disjoncteurs électromécaniques classiques.

De manière avantageuse, il est ainsi possible de protéger efficacement les commutateurs électroniques et de ne pas générer en continue de la chaleur lors du fonctionnement normal du dispositif car les thyristors de protection ne travaillent que si un court-circuit se produit. En effet, les thyristors de protection/de dérivation du courant de court-circuit ne travaillent que pendant le court-circuit et conservent une température de fonctionnement basse. Par conséquent, ces thyristors ont, au moment du court-circuit, des caractéristiques optimales pour le passage d'un courant élevé.

De même, le dimensionnement des thyristors ou IGBT de protection peut être fait en fonction des caractéristiques physiques des appareils de coupure se trouvant en amont, notamment de leur capacité thermique en termes de I²t. De ce fait, ces thyristors peuvent accepter l'énergie thermique associée au pouvoir de coupure des disjoncteurs ou des fusibles placés en amont sur le circuit.

Un autre avantage du dispositif voire du procédé de commande selon la présente invention consiste en la gestion dans le temps d'un court-circuit du fait que la carte de contrôle pilotant les thyristors de protection garantie un blocage des thyristors de régulation des lampes et des thyristors de protection dès la fin de la demi-alternance pendant laquelle le court-circuit s'est produit.

Les avantages énumérés ci-dessus démontrent que la présente invention permet par des mesures simples et efficaces de protéger les composants d'une installation de préchauffage utilisant des lampes infrarouges fragiles contre les effets des courts-circuits causés notamment par le bris de ces lampes.

## Revendications

1. Dispositif de commande d'au moins un moyen de chauffage (6) compris dans une installation de préchauffage de préformes utilisées dans la fabrication d'emballages en matière synthétique, le dispositif comportant
- au moins un premier commutateur de puissance (4) mis en série avec ledit au moins un moyen de chauffage (6),
- une carte de contrôle (8) permettant de régler de manière indépendante l'intensité de courant à travers chaque moyen de chauffage (6) par l'intermédiaire du premier commutateur de puissance (4) correspondant,
**caractérisé par le fait que** le dispositif comporte
- au moins un moyen de détection (3) mis en série avec ledit moyen de chauffage (6) ainsi qu'avec ledit premier commutateur de puissance (4) et permettant la mesure du courant et/ou de la tension,
- au moins un deuxième commutateur de puissance (5) mis en parallèle audit premier commutateur de puissance (4) et piloté par ladite carte de contrôle (8),
- ladite carte de contrôle (8) étant adapté à dévier, dès qu'un courant dépassant une valeur de seuil est détecté dans ledit moyen de détection (3), le courant dans ledit deuxième commutateur de puissance (5).

2. Dispositif de commande selon la revendication précédente, **caractérisé par le fait qu'**il est alimenté par un réseau électrique industriel (1) à courant alternatif.

3. Dispositif de commande selon l'une des revendications précédentes,
**caractérisé par le fait que** le premier commutateur de puissance (4) et/ou le deuxième commutateur de puissance (5) consistent en un thyristor ou un transistor bipolaire à grille isolée (IGBT).

4. Dispositif de commande selon la revendication précédente, **caractérisé par le fait que** le premier commutateur de puissance (4) a une capacité thermique comprise entre 400 A²s et 900 A²_{S} et le deuxième commutateur de puissance (5) a une capacité thermique comprise entre 15.000 A²s et 35.000 A²_{S}.

5. Dispositif de commande selon l'une des revendications précédentes,
**caractérisé par le fait qu'**il comporte au moins un disjoncteur électromécanique (2, 7) mis en série avec ledit moyen de détection (3), avec ledit au moins un premier commutateur de puissance (4), ainsi qu'avec ledit au moins un moyen de chauffage (6) et permettant de couper l'alimentation électrique (1) lorsqu'un courant dépassant une valeur de seuil est détecté.

6. Dispositif de commande selon l'une des revendications précédentes,
**caractérisé par le fait que** ledit au moins un moyen de détection (3) consiste en un détecteur Hall.

7. Dispositif de commande selon l'une des revendications précédentes,
**caractérisé par le fait que** ladite carte de contrôle est connectée à un système central de commande (9).

8. Installation de préchauffage de préformes utilisées dans la fabrication d'emballages en matière synthétique comportant au moins un moyen de chauffage (6), **caractérisé par le fait qu'**il comporte au moins un dispositif de commande selon l'une des revendications précédentes 1 à 7.

9. Installation de préchauffage de préformes selon la revendication précédente,
**caractérisé par le fait que** chaque moyen de chauffage (6) comprend une lampe à rayonnement émettant dans le spectre infrarouge.

10. Installation de préchauffage de préformes selon la revendication précédente,
**caractérisé par le fait qu'**elle consiste en une succession de fours indépendants comportant chacun au moins une lampe à rayonnement (6) émettant dans le spectre infrarouge, chacune des lampes infrarouges (6) d'un four étant pilotable ainsi que protégeable de manière indépendante par ledit dispositif de commande.

11. Procédé de commande pour la mise en action du dispositif de commande selon l'une des revendications précédentes 1 à 7 respectivement de l'installation de préchauffage selon l'une des revendications précédentes 8 à 10, le procédé comportant l'étape de régler le courant à travers chaque moyen de chauffage (6) par l'intermédiaire du premier commutateur de puissance (4) correspondant mis en série avec ledit moyen de chauffage (6), **caractérisé par le fait que** le procédé comporte encore les étapes de
- surveiller le courant mesuré par le moyen de détection (3) mis en série avec ledit moyen de chauffage (6) et ledit premier commutateur de puissance (4), et
- dévier, dès qu'un courant dépassant une valeur de seuil est détecté dans ledit moyen de détection (3), le courant dans le deuxième commutateur de puissance (5) mis en parallèle audit premier commutateur de puissance (4).

12. Procédé de commande selon la revendication précédente, **caractérisé par le fait qu'**il comporte l'étape de bloquer le premier commutateur de puissance (4) ainsi que le deuxième commutateur de puissance (5) dès la fin de la demi-alternance du courant alternatif pendant laquelle un courant dépassant une valeur de seuil a été détecté.

13. Procédé de commande selon l'une des revendications précédentes 11 ou 12,
**caractérisé par le fait qu'**il comporte l'étape de couper l'alimentation électrique (1) par l'intermédiaire dudit disjoncteur électromécanique (2, 7) dès que le courant le traversant dépasse une valeur de seuil.
